# EUROPÄISCHE PATENTSCHRIFT

(11) **EP 4 127 518 B1**
(45) Veröffentlichungstag und Bekanntmachung des Hinweises auf die Patenterteilung: **22.10.2025**
(21) Anmeldenummer: 21709372.3
(22) Anmeldetag: 01.03.2021
(51) Int. Cl.: F16H 57/03, F16H 57/031, F16H 57/033, F16H 57/08, F16H 57/04

(54) **WULST FÜR GEHÄUSEDURCHFÜHRUNGEN**
BEAD FOR HOUSING BUSHINGS
BOURRELET POUR DOUILLES DE CARTER

(30) Priorität: 31.03.2020 DE 102020204205
(43) Veröffentlichungstag der Anmeldung: 08.02.2023
(73) Patentinhaber: ZF Friedrichshafen AG, 88046 Friedrichshafen (DE)
(72) Erfinder: LOHMANN, Christian, 58454 Witten (DE)
(74) Vertreter: ZF Friedrichshafen AG
(86) Internationale Anmeldenummer: PCT/EP2021/054975
(87) Internationale Veröffentlichungsnummer: WO 2021/197728

(56) Entgegenhaltungen:
- CN-A- 103 671 741
- DE-A1- 102006 000 018
- JP-A- 2017 141 936

## Beschreibung

Die Erfindung betrifft ein Verfahren nach dem Oberbegriff von Anspruch 1.

Aus dem Stand der Technik sind Getriebegehäuse mit Gehäusedurchführungen bekannt. Um Kosten und Gewicht zu sparen, werden die Wandstärken der Gehäuse nur so stark ausgeführt, wie es aus Festigkeitsgründen erforderlich ist. Im Bereich der Gehäusedurchführungen sind Verstärkungen erforderlich. Durch die Verstärkungen ist die Position der Gehäusedurchführungen vorgegeben.

Es ist möglich, die Gehäusedurchführungen flexibel zu positionieren, wenn ein Getriebegehäuse mehr Verstärkungen als Gehäusedurchführungen aufweist. Für die Positionierung der Gehäusedurchführungen stehen dann jeweils mehrere Verstärkungen zur Auswahl. Allerdings erhöhen sich durch die nicht genutzten Verstärkungen die Herstellungskosten. Zudem ist die Position der Gehäusedurchführungen weiterhin von der Position der Verstärkungen abhängig. Es ist nicht möglich, eine Gehäusedurchführung in einer Zwischenposition anzubringen.

Der Erfindung liegt die Aufgabe zugrunde, ein Verfahren vorzuschlagen.

Diese Aufgabe wird gelöst durch ein Verfahren nach Anspruch 1. Bevorzugte Weiterbildungen des Verfahrens sind in den Unteransprüchen enthalten.

Ein nicht beanspruchtes Getriebegehäuse weist mindestens einen Wulst zum Einbringen einer oder mehrerer Gehäusedurchführungen auf. Bei dem Wulst handelt es sich um eine Verdickung. Er zeichnet sich dadurch aus, dass er gegenüber einem oder mehreren umgebenen Bereichen des Getriebegehäuses erhaben ist. Die umgebenen Bereiche grenzen dabei direkt an den Wulst an. Die Oberfläche des Wulsts erhebt sich gegenüber den Oberflächen der umgebenen Bereiche. Die Oberfläche des Wulsts ragt also weiter in den umgegebenen Raum hinein als die Oberflächen der umgebenen Bereiche.

Eine Gehäusedurchführung ist eine Durchgangsöffnung in einer Wandung des Getriebegehäuses. Eine Durchgangsöffnung weist genau zwei Mündungen auf. Sie zeichnet sich dadurch aus, dass sie einen Innenraum des Getriebegehäuses mit dessen Umgebung verbindet. Die Durchgangsöffnung mündet also in den Innenraum und in die Umgebung des Getriebegehäuses. Die Durchgangsöffnung kann etwa als Durchgangsbohrung ausgestaltet sein.

Die eine oder mehreren Gehäusedurchführungen des nicht beanspruchten Getriebegehäuses münden in den Wulst. Dies bedeutet, dass der Wulst jeweils eine Mündung der Gehäusedurchführungen aufweist.

Durch den Wulst ist es möglich, Gehäusedurchführungen in unterschiedlichen Positionen und/oder unterschiedliche Gehäusedurchführungen einzubringen. Dadurch lässt sich ein Gehäuserohteil ohne Neukonstruktion flexibel für verschiedene Anwendungsfälle mit unterschiedlichen Gehäusedurchführungen verwenden.

Die eine oder mehreren Gehäusedurchführungen weisen vorzugsweise jeweils ein oder mehrere Fixiermittel auf. Vorzugsweise handelt es sich um Gewinde, insbesondere in die Gehäusedurchführungen eingebrachte Innengewinde.

Die Fixiermittel dienen der Fixierung beispielsweise von Ölleitungen, Sensoren, Verschlussstopfen oder Schaugläsern. Die Ölleitungen werden vorzugsweise beidseitig jeweils einer Gehäusedurchführung fixiert. Durch die Gehäusedurchführung sind die Ölleitungen dann ölleitend miteinander verbunden. Eine mit einem Stopfen verschlossene Gehäusedurchführung dient etwa als Öleinfüll- oder Ablassöffnung. Durch ein Schauglas lässt sich der Ölstand und die Beschaffenheit des in dem Getriebegehäuse vorhandenen Öls kontrollieren.

Der Wulst ist bevorzugt rotationssymmetrisch. In einer bevorzugten Weiterbildung hat der Wulst die Form eines Toroids. Ein Toroid ist ein Rotationskörper, dessen Rotationsachse durch ein Loch in dem Körper verläuft, den Körper also nicht schneidet. Bei einem toroidförmigen Wulst gibt es genau zwei der oben beschriebenen den Wulst umgebenen Bereiche.

Das nicht beanspruchte Getriebegehäuse weist in einer darüber hinaus bevorzugten Weiterbildung eine Öffnung für eine Ein- oder Ausgangswelle auf. Die Eingangswelle verläuft durch die Öffnung hindurch und ist vorzugsweise gegenüber der Öffnung mittels einer oder mehrerer Dichtungen abgedichtet. Der Wulst und die Öffnung sind weiterbildungsgemäß koaxial zueinander angeordnet. Dies bedeutet, dass der Wulst und die Öffnungen achsgleich sind. Sie weisen also übereinstimmende Mittel- bzw. Symmetrieachsen auf.

Das nicht beanspruchte Getriebegehäuse ist bevorzugt mit einem Hohlrad und einem Verbindungsstück weitergebildet. Bei dem Hohlrad handelt es sich etwa um das Hohlrad einer Planetenstufe. Eine Welle, die drehfest mit einem Planetenträger der Planetenstufe verbunden ist, bildet vorzugsweise die oben beschriebene Ein- oder Ausgangswelle. Das Verbindungsstück verbindet das Hohlrad mit der Öffnung. Insbesondere kann das Verbindungsstück selbst die Öffnung aufweisen. Weiterhin sind das Hohlrad und das Verbindungsstück miteinander gefügt oder einstückig miteinander verbunden. Das Verbindungsstück weist weiterbildungsgemäß den Wulst auf.

Der Wulst weist in einer darüber hinaus bevorzugten Weiterbildung mindestens eine ebene Fläche auf. Diese hat etwa die Form eines Kreisrings. Die einen oder mehreren Gehäusedurchführungen münden vorzugsweise in die ebene Fläche. Vorzugsweise dient die ebene Fläche als Dichtfläche. Auch vereinfacht sich durch die ebene Fläche die Einbringung der einen oder mehreren Gehäusedurchführungen.

Der Wulst ist bevorzugt einstückig ausgeführt. Insbesondere verläuft weiterbildungsgemäß keine Trennfläche zwischen verschiedenen Gehäuseteilen durch den Wulst.

Der Wulst ist bevorzugt mit mindestens einer der oben genannten Gehäusedurchführungen weitergebildet.

Ein erfindungsgemäßes Verfahren dient zum Fertigen eines ersten Getriebegehäuses und eines zweiten Getriebegehäuses.

Das erste Getriebegehäuse wird aus einem ersten Gehäuserohling gefertigt. Entsprechend wird das zweite Getriebegehäuse aus einem zweiten Gehäuserohling gefertigt. Ein Gehäuserohling bezeichnet ein Halbfertigteil, aus dem das erste Getriebegehäuse oder das zweite Getriebegehäuse gefertigt wird.

Erfindungsgemäß sind der erste Gehäuserohling und der zweite Gehäuserohling zueinander baugleich. Dies ist der Fall, wenn die Gehäuserohlinge in ihren physikalischen Parametern - insbesondere hinsichtlich ihrer Material- und Geometrieeigenschaften - im Rahmen der auftretenden Fertigungstoleranzen übereinstimmen.

Der erste Gehäuserohling und der zweite Gehäuserohling weisen jeweils mindestens einen Wulst auf. In den Wulst des ersten Gehäuserohlings und in den Wulst des zweiten Gehäuserohlings werden unterschiedliche Gehäusedurchführungen eingebracht. Mindestens eine in dem Wulst des ersten Gehäuserohlings eingebrachte Gehäusedurchführung unterscheidet sich von sämtlichen in den Wulst des zweiten Gehäuserohlings eingebrachten Gehäusedurchführungen.

Eine erste, in den Wulst des ersten Gehäuserohlings eingebrachte Gehäusedurchführung und eine zweite, in den Wulst des zweiten Gehäuserohlings eingebrachte Gehäusedurchführung unterscheiden sich voneinander, wenn die erste Gehäusedurchführung und die zweite Gehäusedurchführung sich hinsichtlich ihrer Position relativ zu dem jeweiligen Gehäuserohling bzw. relativ zueinander entsprechenden Bezugspunkten in dem jeweiligen Gehäuserohling unterscheiden.

Durch die Verwendung baugleicher Gehäuserohlinge ergeben sich Skaleneffekte, durch die sich Kosten einsparen lassen.

Das nicht beanspruchte Getriebegehäuse oder eine bevorzugte Weiterbildung ist vorzugsweise Teil eines ersten Getriebes. Dieses gehört zu einer Getriebebaureihe, die darüber hinaus ein zweites Getriebe umfasst. Das zweite Getriebe weist ein zweites nicht beanspruchtes oder gemäß einer bevorzugten und nicht beanspruchten Weiterbildung ausgestaltetes Getriebegehäuse auf. Das erste Getriebegehäuse und das zweite Getriebegehäuse sind aus baugleichen Gehäuserohlingen hergestellt.

Eine Getriebebaureihe ist eine Anordnung von mindestens zwei Getrieben, die hinsichtlich der Ausprägung mindestens eines technischen Merkmals übereinstimmen. Das erste Getriebe und das zweite Getriebe der vorliegenden Baureihe stimmen hinsichtlich der nicht beanspruchten Bauart ihrer Getriebegehäuse überein.

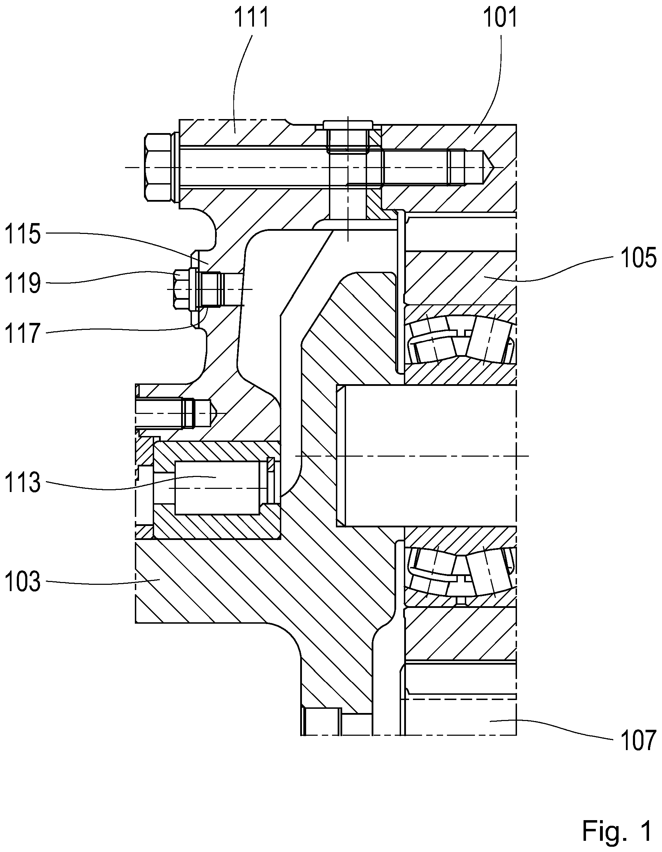

Ein bevorzugtes Ausführungsbeispiel eines nicht beanspruchten Getriebegehäuses ist in Fig. 1 dargestellt. Im Einzelnen zeigt:
Fig. 1 einen Ausschnitt einer Schnittdarstellung eines Getriebes.

Der in Fig. 1 dargestellte Ausschnitt bezieht sich auf eine Planetenstufe mit einem Hohlrad 101, einem drehbar gelagerten Planetenträger 103, Planetenrädern 105 und einem Sonnenrad 107. Die Planetenräder 105 kämmen jeweils mit dem Hohlrad 101 und dem Sonnenrad 107.

Das Hohlrad 101 ist Teil eines Getriebegehäuses. Zu dem Getriebegehäuse gehört weiterhin ein Gehäusedeckel 111. Dieser weist einen Flansch auf, der mit dem Hohlrad 101 verschraubt ist. Der Gehäusedeckel 111 bildet weiterhin einen Lagersitz für ein Lager 113, mit dem der Planetenträger 103 drehbar gelagert ist.

In dem Gehäusedeckel 111 verläuft ein Wulst 115. Der Wulst 115 ist rotationssymmetrisch zu einer Drehachse des Planetenträgers 103. Er ist mit einer durchgehenden Gewindebohrung 117 versehen. In die Gewindebohrung 117 ist ein Verschlussstopfen 119 eingeschraubt.

Die Gewindebohrung 117 lässt sich an beliebiger Stelle in den Wulst 115 einbringen. Daher eignet sich das Gehäuse in seiner dargestellten Form über die Neupositionierung der Gewindebohrung 117 hinausgehende konstruktive Änderungen für verschiedene Verwendungsmöglichkeiten.

### Bezugszeichen

- 101: Hohlrad
- 103: Planetenträger
- 105: Planetenrad
- 107: Sonnenrad
- 111: Gehäusedeckel
- 113: Lager
- 115: Wulst
- 117: Gewindebohrung
- 119: Verschlussstopfen

## Patentansprüche

1. Verfahren zum Fertigen eines ersten Getriebegehäuses (101, 111) aus einem ersten Gehäuserohling und eines zweiten Getriebegehäuses (101, 111) aus einem zweiten Gehäuserohling; wobei
der erste Gehäuserohling und der zweite Gehäuserohling baugleich sind und jeweils mindestens einen Wulst (115) aufweisen; wobei
in den Wulst (115) des ersten Gehäuserohlings eine erste Gehäusedurchführung (117) und in den Wulst (115) des zweiten Gehäuserohlings eine zweite Gehäusedurchführung eingebracht werden,
**dadurch gekennzeichnet, dass**
die erste Gehäusedurchführung an einer Position in den Wulst des ersten Gehäuserohlings eingebracht wird, die sich von der Position der in den Wulst des zweiten Gehäuserohlings eingebrachten zweiten Gehäusedurchführung unterscheidet.

2. Getriebebaureihe mit einem ersten Getriebe und einem zweiten Getriebe; wobei das erste Getriebe ein erstes Getriebegehäuse (101, 111) und das zweite Getriebe ein zweites Getriebegehäuse (101, 111) aufweist; **dadurch gekennzeichnet, dass** das erste Getriebegehäuse (101, 111) und das zweite Getriebegehäuse (101, 111) gemäß dem Verfahren nach Anspruch 1 hergestellt sind.

3. Getriebebaureihe nach dem vorhergehenden Anspruch; **dadurch gekennzeichnet, dass** das erste Getriebegehäuse (101, 111) und das zweite Getriebegehäuse (101, 111) teilweise baugleich sind.

## Claims

1. A method for manufacturing a first transmission housing (101, 111) from a first housing blank and a second transmission housing (101, 111) from a second housing blank, wherein
the first housing blank and the second housing blank are of identical design and each comprise at least one bead (115), wherein
a first housing feed-through opening (117) is introduced into the bead (115) of the first housing blank and a second housing feed-through opening is introduced into the bead (115) of the second housing blank,
**characterised in that**
the first housing feed-through opening is introduced at a position in the bead of the first housing blank that is different from the position of the second housing feed-through opening introduced into the bead of the second housing blank.

2. A transmission series with a first transmission and a second transmission, wherein the first transmission has a first transmission housing (101, 111) and the second transmission has a second transmission housing (101, 111), **characterised in that** the first transmission housing (101, 111) and the second transmission housing (101, 111) are manufactured according to the method of claim 1.

3. The transmission series according to the preceding claim,
**characterised in that**
the first transmission housing (101, 111) and the second transmission housing (101, 111) are partially of identical design.

## Revendications

1. Procédé de fabrication d'un premier carter d'engrenage (101, 111) à partir d'une première ébauche de carter et d'un second carter d'engrenage (101, 111) à partir d'une seconde ébauche de carter ; dans lequel
la première ébauche de boîtier et la seconde ébauche de boîtier sont de construction identique et comportent chacune au moins un bourrelet (115) ; dans lequel
un premier passage de boîtier (117) est introduit dans le bourrelet (115) de la première ébauche de boîtier et un second passage de boîtier est introduit dans le bourrelet (115) de la seconde ébauche de boîtier,
**caractérisé en ce que**
le premier passage de boîtier est introduit dans le bourrelet de la première ébauche de boîtier à une position différente de la position du second passage de boîtier introduit dans le bourrelet de la seconde ébauche de boîtier.

2. Série de transmissions comprenant une première et une seconde transmissions ; dans lequel la première transmission a un premier boîtier d'engrenage (101, 111) et la seconde transmission a un second boîtier d'engrenage (101, 111) ; **caractérisée en ce que** le premier boîtier d'engrenage (101, 111) et le second boîtier d'engrenage (101, 111) sont fabriqués selon le procédé de la revendication 1.

3. Série de transmissions selon la revendication précédente,
**caractérisée en ce que**
le premier boîtier d'engrenage (101, 111) et le second boîtier d'engrenage (101, 111) sont de construction partiellement identique.
